(19)

Europäisches
Patentamt
European
Patent Office
Office européen
des brevets

(11) **EP 1 850 525 A1**

(12) **EUROPEAN PATENT APPLICATION**

(43) Date of publication:
**31.10.2007 Bulletin 2007/44**

(51) Int Cl.:
*H04L 5/02* (2006.01)    *H04L 27/26* (2006.01)

(21) Application number: **07008432.2**

(22) Date of filing: **25.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **25.04.2006 CN 200610076061**

(71) Applicants:
• **Samsung Electronics Co., Ltd.**
  **Suwon-si, Gyeonggi-Do (KR)**
• **Beijing Samsung Telecom R & D Center**
  **Haidian District,**
  **Beijing 100081 (CN)**

(72) Inventors:
• **Liang, Zongchuang**
  **Suwon-si,**
  **Gyeonggi-do (KR)**

• **Park, Dong-Seek**
  **Suwon-si,**
  **Gyeonggi-do (KR)**
• **Oh, Chang-Yoon**
  **Suwon-si,**
  **Gyeonggi-do (KR)**
• **Ciio, Young-Kwon**
  **Suwon-si,**
  **Gyeonggi-do (KR)**
• **Hong, Sung-Kwon**
  **Suwon-si**
  **Gyeonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(54) **Orthogonalizing signals transmitted from a base station in an OFDMA system**

(57)    A method of orthogonalizing signals transmitted from a BS in an OFDMA system, at a transmitting end, includes a) performing encoding, interleaving and modulation on original information bits; b) allocating sub-carriers with equivalent intervals to a sub-channel, and dividing channels into two parts of a cell edge user channel and a center area channel; c) mapping modulated information symbols to the corresponding sub-carriers; d) performing orthogonalizing processing on the two parts of channels; e) for a user at an edge of the cell, according to result of step b), dividing an OFDM symbol into subsections of equal length; f) multiplying the subsections obtained from step e) by a corresponding orthogonalizing sequence of the cell; g) adding the OFDM symbols of the two parts together to form a whole OFDM symbol; h) adding a cyclic prefix for the system; and i) performing D/A conversion, RF processing and feedback over a transmitting antenna on a base-band signal.

FIG.8

EP 1 850 525 A1

**Description**

**BACKGROUND OF THE INVENTION**

1. Field of the Invention

The present invention generally relates to a cellular communication system applied to Orthogonal Frequency Division Multiplexing (OFDM) technology, such as a third generation mobile communication system, Worldwide Interoperability for Microwave Access (WiMAX) system, Wireless Broadband (WiBro) system, etc., and in particular to a method and system of orthogonalizing signals transmitted from a Base Station (BS) applied to OFDM Access (OFDMA).

2. Description of the Related Art

As is well known, in an OFDMA based cellular system, on the premises that a frequency multiplexing coefficient is 1, various cells, especially edge areas of various cells, will inevitably suffer frequency interference from adjacent cells. Therefore, not only is data transmission limited from Unit Equipments (UEs) at an edge of a cell, but also system throughput is notably reduced. Thus, adjacent cell interference is one of the main factors that affect performance of OFDM/OFDMA technology based cellular systems.

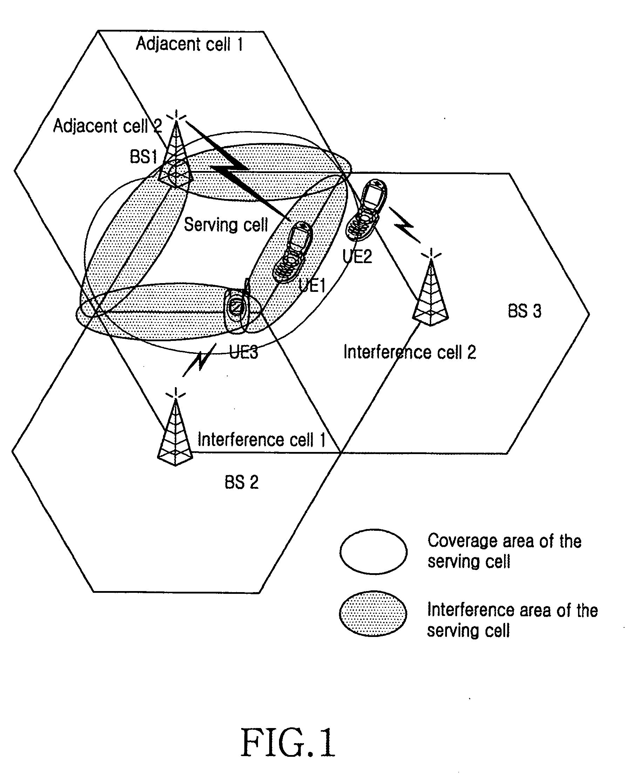

As is shown in Figure 1, an example of a cell under control of a BS is divided into three sectors, indicated as a serving cell, an adjacent cell 1 and an adjacent cell 2, respectively. Sectors of other adjacent cells that correspond to sectors in the serving cell are defined as an interfering cell 1 and an interfering cell 2. UE 1 is an edge user of the serving cell, and UE2 and UE3 are users of interfering cell 1 and interfering cell 2, respectively, that use the same sub-channel as UE1. Then UE1 will suffer frequency interference from adjacent cell and interference cell.

A base-band receiving signal at a receiving end user $r(t)$ can be generally denoted as Equation (1)

$$r(t) = s(t) + \sum_{m=1}^{M} I_m(t)$$

$$\ldots (1)$$

In Equation (1), $s(t)$ is a signal that the serving cell transmits to UE1, $I_m(t)$ is frequency interference signal from adjacent cells and interference cells, and $M$ is a number of the interference. It is easily seen that a UE at the edge of the cell suffers strongly from adjacent cell interference (on a condition that transmitting power of various cells are equal, the Signal to Interference Noise Ratio (SINR) at a user receiving end is very low, approaching in the worst case only around -3dB). Thus, adjacent cell interference results in some negative effects☐ receiving performance for a UE deteriorates dramatically, and throughput of a system drops quickly. Therefore, a Cell Edge Performance Enhancement (CEPE) issue of an OFDM/OFDMA based system is worth investigating and resolving.

Currently, a CEPE issue of the OFDM/OFDMA based system is a hot topic of standardization groups, such as 3rd Generation Partnership Project Long Term Evolution (3GPP LTE), WiMAX and WiBro. There is no definite and ultimate solution in current protocols or specifications.

Currently, there are many resolutions and proposals on protocols and specifications to solve the problem of cell edge interference. For example, in 3GPP LTE, there are many resolution applications that make discussion and analysis on this issue. Generally speaking, the following problems exist in current various technologies:

In various frequency and time resource scheduling methods, a frequency multiplexing coefficient cannot actually reach 1 or be close to 1.

In addition, as for almost all processes, they all need uniform scheduling and managemcnt on frequency and time resource among various BSs, which is difficult to be realized in engineering.

A cell distinguishing process that uses spreading codes and scrambling codes may reduce the information transmission rate artificially. However, the larger the band-spread factor is, the greater the information transmission rate is reduced.

**SUMMARY OF THE INVENTION**

The present invention solves the above-mentioned problems, and provides a method and a system of orthogonalizing signals transmitted from a BS applied to an OFDMA system.

According to an aspect of the present invention, a method of orthogonalizing signals transmitted from a BS in an OFDMA system, at a transmitting end, includes a) performing encoding, interleaving and modulation on original information bits; b) allocating sub-carriers with equivalent intervals to a sub-channel, and dividing channels into two parts of a cell edge user channel and a center area channel; c) mapping modulated information symbols to the corresponding sub-carriers; d) performing orthogonalizing processing on the two parts of channels; e) for a user at an edge of the cell, according to result of step b), dividing an OFDM symbol into subsections of equal length; f) multiplying the subsections obtained from step e) by a corresponding orthogonalizing sequence of the cell; g) adding the OFDM symbols of the two parts together to form a whole OFDM symbol; h) adding a cyclic prefix for the system; i) performing Digital/Analog (D/A) conversion, Radio Frequency (RF) processing and feedback over a transmitting antenna on a base-band signal.

According to another aspect of the present invention, a method of orthogonalizing signals transmitted from a BS in an OFDMA system, at a receiving end, includes a) performing unloading, A/D conversion on a received RF signal, converting the result to a base-band signal for succeeding processing; b) splitting a signal of a cell; c) spreading the result obtained from step b), performing cyclic spreading on P result points obtained from step b); d) for a user in a cell center, subtracting a result obtained in step c)from the received signal; e) performing a de-orthogonalizing processing on OFDM symbols; f) extracting information in sub-carriers; g) performing de-modulation, de-interleaving and de-coding on data.

According to a further aspect of present invention, a system of orthogonalizing signals transmitted from a BS in an OFDM/OFDMA system has a transmitting end which includes a) a pre-processing module, for performing encoding, interleaving and modulation on original information bits; b) a sub-signal division module, for allocatting sub-carriers with equivalent intervals to a sub-channel, and dividing the channel into two parts of a cell edge user channel and a center area channel; c) an information mapping module, for mapping the modulated information symbols to corresponding sub-carriers; d) an orthogonalizing processing module, for performing orthogonalizing processing on the two parts of channels; e) a section dividing module, for the user at the edge of the cell, according to result of step b), for dividing the OFDM symbol into subsections of equal length; f) an orthogonalizing module, for multiplying subsections obtained from step e) by a corresponding orthogonalizing sequence for the cell; g) an adding module, for adding OFDM symbols of the two parts together to form a whole OFDM symbol; h) a cyclic prefix module, for adding a cyclic prefix for the system; i) a data post-processing module, for performing D/A conversion, RF processing and feedback over a transmitting antenna on a base-band signal.

According to still another aspect of present invention, a system of orthogonalizing signals transmitted from a BS in an OFDM/OFDMA system has a receiving end which includes a) a pre-processing module, for performing unloading, A/D conversion on a received RF signal and converting it to a base-band signal for succeeding processing; b) a splitting module, for splitting a cell signal; c) a period spreading module, for spreading the result obtained from step b) and performing cyclic spreading on P result points obtained from step b); d) a cell edge signal removing module, for a user in a cell center, subtracting the result from step c)from the received signal; e) a de-orthogonalizing module, for performing de-orthogonalizing processing on OFDM symbols; f) an Information extracting module, for extracting information in sub-carriers; g) a Data post-processing module, for performing de-modulation, de-interleaving and de-coding on the data.

According to yet another aspect of the present invention, in a method of the present invention, frequency interference from an interference cell and an adjacent cell on a serving cell can be totally eliminated, thus quality of communication for a user at an edge of the cell is improved, and system capacity is increased.

## BRIEF DESCRIPTION OF THE DRAWINGS

The above and other objects, features and advantages of the present invention will be more apparent from the following detailed description taken in conjunction with the accompanying drawings, in which:

Figure 1 shows a diagram of cell edge interference in an OFDM/OFDMA system;
Figure 2 shows a processing process at a transmitting end according to the present invention;
Figure 3 shows a processing process at a receiving end of a user at edge of the cell according to the present invention;
Figure 4 shows a processing process of a receiving end of a user at a center area of a cell according to the present invention;
Figure 5 shows a division method for sub-channels according to the present invention;
Figure 6 shows a diagram of periods of OFDM symbols according to the present invention;
Figure 7 shows an orthogonalizing design of OFDM symbols according to the present invention; and
Figure 8 shows an orthogonalizing design process of OFDM symbols at a transmitting end according to the present invention.

## DETAILED DESCRIPTION OF THE PREFERRED EMBODIMENTS

Preferred embodiments of the present invention will now be described with reference to the accompanying drawings. In the following description, descriptions of known functions and configurations will be omitted when it may make the subject matter of the present invention rather unclear.

Figure 1 shows cell edge interference in an Orthogonal Frequency Division Multiplexing/Orthogonal Frequency Division Multiple Access (OFDM/OFDMA) system. This demonstrates the problem resolved by the present invention. However, while the structure of three sectors in the cell of Figure 1 is just one example, different sector division cases can be similarly addressed according to the present invention. When UE1 belonging to the serving cell is receiving information through some sub-channels, UE1 actually receives signals sent from interference cell 1 to UE3 belonging to UE3 through the same sub-channel, and signals sent from interference cell 2 to UE2 belonging to UE2 through the same sub-channel. Certainly this interference from adjacent cell 1 and adjacent cell 2 belongs to the same BS as the serving cell does. Therefore, the present invention separates the signal belonging to UE1 from the interference of various cells in the same sub-channel interference.

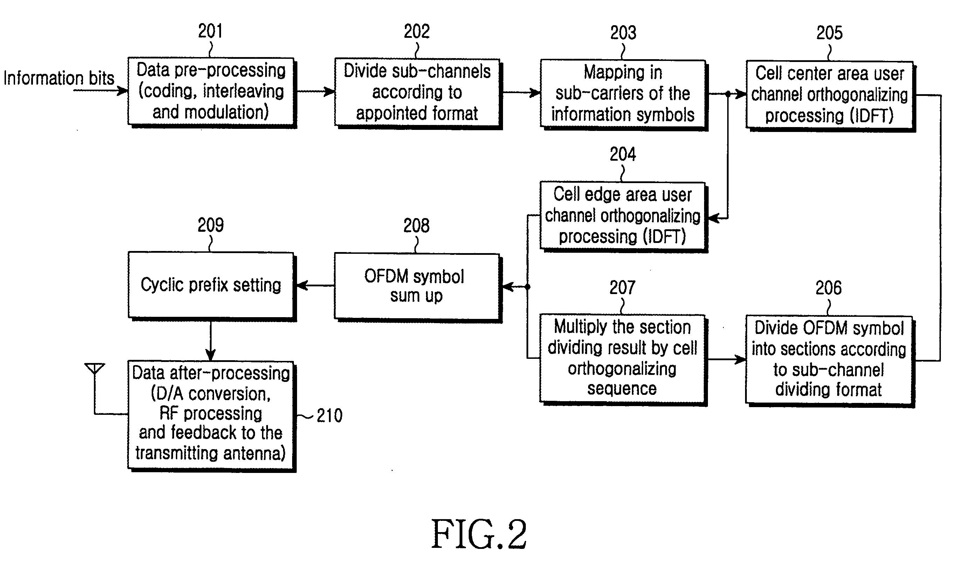

Figure 2 shows a processing process at a transmitting end according to the present invention.

In step 201 a data pre-processing module performs processes, such as encoding, interleaving and modulation on the original information bits. In step 202 a sub-signal division module divides sub-channels according to the specified format, namely sub-carriers of equivalent intervals are allocated to one sub-channel, and the first sub-carrier is located in zero position. In step 203 an information mapping module maps the modulated information symbols to corresponding sub-carriers. In step 204 a cell center area user channel orthogonalizing processing (Inverse Discrete Fourier Transform (IDFT)) module performs orthogonalizing processing on sub-channels (sub-carrier group) allocated to the user at the center of the cell (IDFT). In step 205 a cell edge area user channel orthogonalizing processing (IDFT) module performs orthogonalizing processing on sub-channels (sub-carrier group) allocated to user at the edge of the cell (IDFT). In step 206 an OFDM symbol section dividing module divides the OFDM symbol into subsections of equal length according to the result from step 202. In step 207 a cell orthogonalizing module performs orthogonalizing design on the signal transmitted from various cells. The specific method is to multiply sections divided by module 206 by the corresponding orthogonalizing sequence of the cell. In step 208 an OFDM symbol adding module for summing up the OFDM symbols belonging to the users at the center and at the edge respectively. In step 209 a cyclic prefix module adds a cyclic prefix for the system. The length of the cyclic prefix equals integral times of subsections obtained in step 206. In step 210 a data post-processing module performs Digital/Analog (D/A) conversion, Radio Frequency (RF) processing and feedback over a transmitting antenna on the base-band signals.

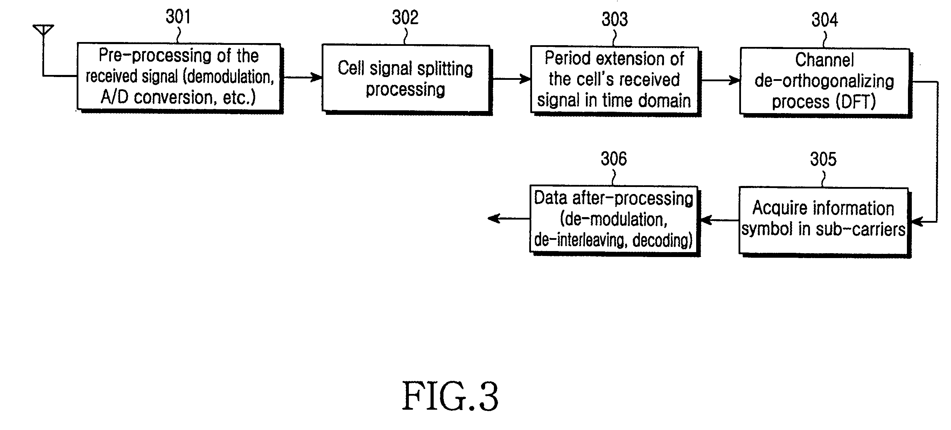

Figure 3 shows a processing process of a receiving end of a user at edge of the cell according to the present invention.

In step 301 a received signal pre-processing module performs processes, such as unloading, A/D conversion on a received RF signal, and converting the received RF signal to a base-band signal for succeeding processing. In step 302 a cell signal splitting processing module removes the adjacent cell frequency signal through accumulation of periods of signals. In step 303 a period spreading module of a received signal of this cell extends the period in time domain of the sequence from P point of the result of step 302 to form data N. In step 304 a channel de-orthogonalizing module, generally implemented through Discrete Fourier Transform (DFT), de-orthogonalizes the received signal. In step 305 an information extracting module, extracts information in sub-carriers. In step306 a data post-processing module performs succeeding processing on the data, such as de-modulation, de-interleaving and de-coding, etc.

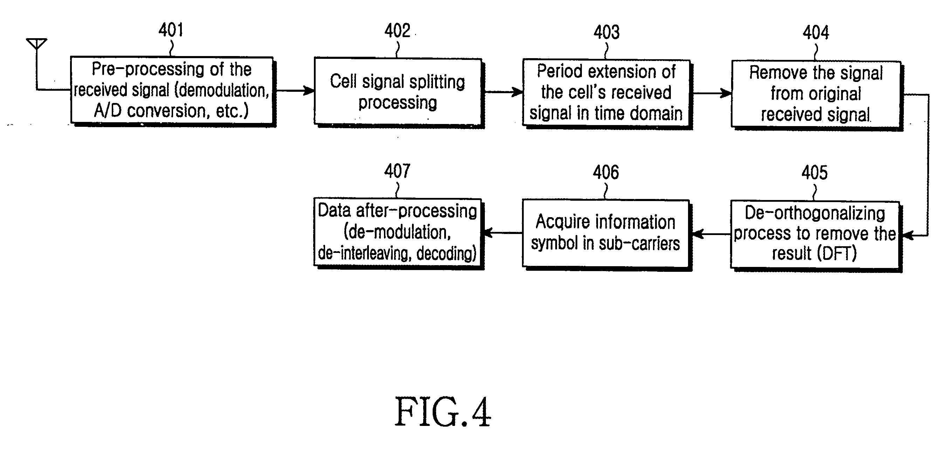

Figure 4 shows a processing process of a receiving end of a user at a center area of a cell according to the present invention.

In step 401 a received signal pre-processing module performs processing, such as unloading, A/D conversion on the received RF signal, and converting the received RF signal to a base-band signal for succeeding processing. In step 402 a cell signal splitting processing occurs. The adjacent cell frequency signals are removed through accumulation of periods of signal. In step 403 a period spreading module spreads the period of a received signal of this cell. The period in time domain of the sequence from P point of the result of step 402 is extended to form data N. In step 404 a cell edge signal removing module removes the result of step 403 from the original received signal. In step 405 a channel de-orthogonalizing module, generally implemented through DFT, de-orthogonalizes the received signal. In step 406 an information extracting module extracts information in sub-carriers. In step 407 a data post-processing module performs succeeding processing on the data, such as de-modulation, de-interleaving and de-coding, etc.

Figure 4 shows a processing process of a receiving end of a user at a center area of a cell according to the present invention.

In the following example, the number of sub-carriers in the whole system is $N$, the value is 1024, the number of sub-channel in the whole system is $Q$, and the value is 64.

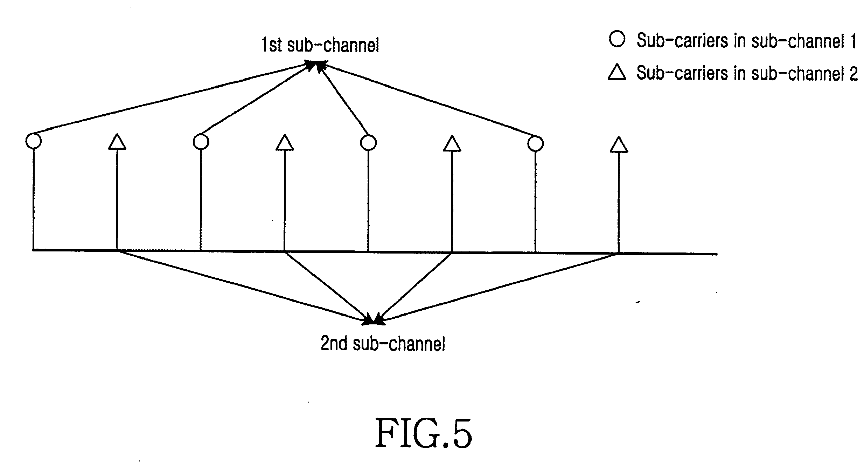

When the number of sub-carriers in one sub-channel is $P$, and $N=P \cdot Q$, the value in is 16. The sub-channels 1 and 2 are also allocated to users at the edge of the cell, and the others are allocated to users at the center of the cell. The actual allocating theory of sub-carriers and sub-channels is shown as Figure 5, namely the sub-channel dividing principle is that sub-carriers are of equivalent intervals.

Now considering only one sub-channel, namely the $k$ th sub-channel, then OFDM symbols in the time domain can be denoted as shown in Equation (2).

$$x^{(k)}(n) = \frac{1}{\sqrt{N}} \cdot \sum_{p=0}^{P-1} X(p \cdot Q + k) \cdot e^{j \cdot \frac{2\pi}{N} \cdot n \cdot (p \cdot Q + k)}$$

$$= e^{j \cdot \frac{2\pi}{N} \cdot n \cdot k} \cdot \frac{1}{\sqrt{N}} \cdot \sum_{p=0}^{P-1} X(p \cdot Q + k) \cdot e^{j \cdot \frac{2\pi}{P} \cdot n \cdot p} \qquad \ldots (2)$$

In Equation (2), $x^{(k)}(n), n=0,1,...,N-1$ is OFDM symbol sampling of the $k_{th}$ sub-channel, $X(p \cdot Q+k)$, $k = 0,1,\cdots,Q-1$, $p = 0,1,\cdots,P-1$.

When $m=0,1,\cdots,P-1$ and $q=0,1,\cdots,Q-1$, then according to Equation (3),

$$x^{(k)}(m + q \cdot P)$$

$$= e^{j \cdot \frac{2\pi}{N} \cdot (m+q \cdot P) k} \cdot \frac{1}{\sqrt{n}} \cdot \sum_{p=0}^{P-1} X(p \cdot Q + k) \cdot e^{j \cdot \frac{2\pi}{P} \cdot (m+q \cdot P) P}$$

$$= e^{j \cdot \frac{2\pi}{Q} \cdot q \cdot k} \cdot x^{(k)}(m) \qquad \ldots (3)$$

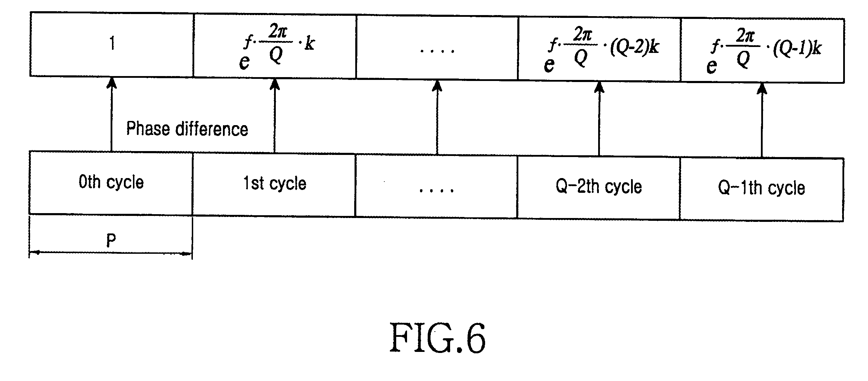

As mentioned above, except for the phase related to sub-channel sequence number, the OFDM symbol of $N$ points long has the period of $P$ points long, and obviously there are $Q$ periods in total, as shown in Figure 6.

Considering all sub-channels synthetically, they all follow a rule. Especially, when $k = 0$, the whole OFDM symbol has Q periods of P points long. Sub-channels 1 and 2 are defined as channels used by the users at the edge of the cell, and the others as channels for the users at the center of the cell. Therefore, it may be redefined that, $P = Q = 32$. Then, at the transmitting end, the sub-sections of the OFDM symbol are weighted with the orthogonalizing sequence related to the cell periodically. Based on the synthesis of this example, the specified orthogonalizing sequence $C_{(s)}(i)$ of the 5 interference cell is given, in which $(s)$ is the sequence of the cell, $i$ is orthogonalizing sequence number.

1. For serving cell $(s = 0)$: $C_{(0)}(i) = \{+1,+1,+1,+1,+1,+1,+1,+1,+1,+1,+1,+1,+1,+1,+1,+1\}$

2. For interference cell 1$(s = 1)$: $C_{(1)}(i)=\{+1,+1,+1,+1,+1,+1,+1,+1,-1,-1,-1,-1,-1,-1,-1,-1\}$

3. For interference cell 2$(s = 2)$: $C_{(2)}(i)=\{+1,+1,+1,+1,-1,-1,-1,-1,+1,+1,+1,+1,-1,-1,-1,-1\}$

4. For adjacent cell 1 $(s = 3)$: $C_{(3)}(i)=\{+1,+1,+1,+1,-1,-1,-1,-1,-1,-1,-1,-1,+1,+1,+1,+1\}$

5. For adjacent cell 2$(s = 4)$: $C_{(4)}(i)=\{-1,-1,-1,-1,-1,-1,-1,-1,+1,+1,+1,+1,+1,+1,+1,+1\}$

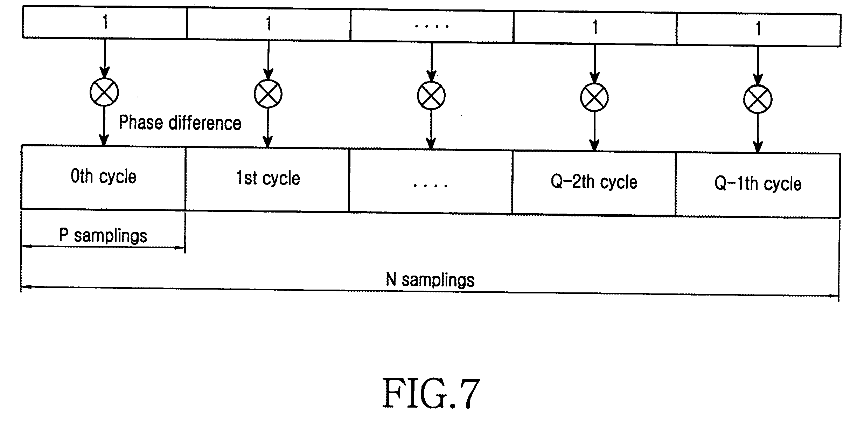

These 5 sequences are mutually orthogonal and the multiplying process by OFDM symbols, the serving cell is taken as an example, is shown as Figure 7.

Then the signal is transmitted to various users belonging to the cell after the cyclic prefix setting in step 209 of Figure 2, and the D/A conversion and the RF processing in step 210. It should be noted that the cyclic prefix must be integral times of P.

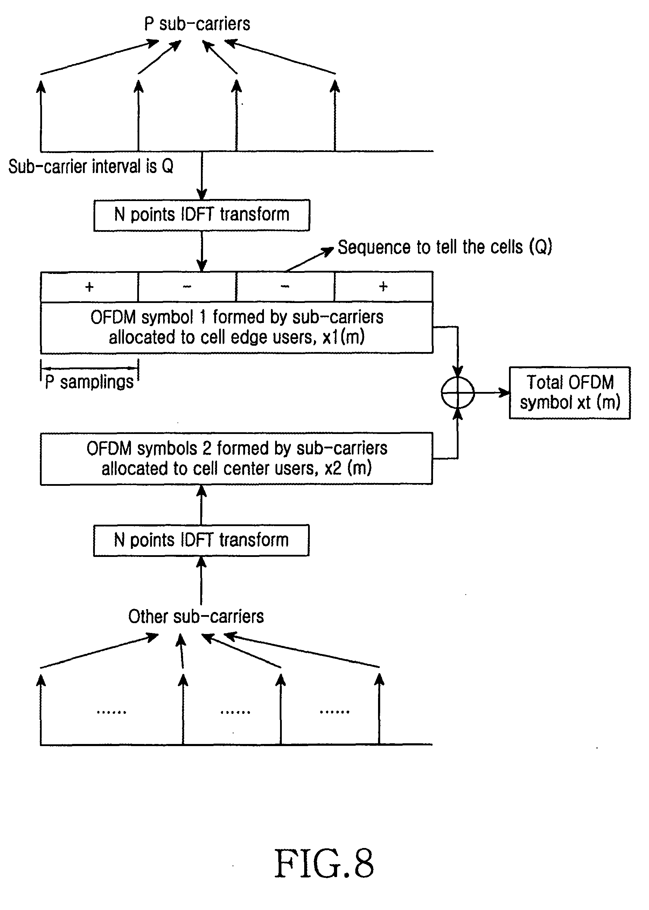

As shown in Figure 8, $x_1(n)$ $(n=0,1,...N-1)$ is OFDM symbols 1 formed by sub-channels used by the users at the edge of the cell, while $x_2(n)$ OFDM symbols 2 is formed by sub-channels used by the users at the center of the cell, the sum of them is the OFDM symbol of the transmitting end, $x_T(n)$. Then, without considering noise and signal fading, the received signal of UE1 is expressed by Equation (4).

$$x_r(n) = \sum_{s=0}^{4} x_T^s(n) \qquad \ldots (4)$$

In Equation (4), $s$ represents the number of the cell. In the receiving end, the following processing of Equation (5) is performed based on the feature that OFDM symbols has obvious periods.

$$z(i) = \sum_{i=0}^{P-1}\sum_{q=0}^{Q-1} C_{(0)}(q)x_r(i+q\cdot P) \qquad i = 0,1,...,P-1 \qquad \qquad \cdots (5)$$

This processing is cell signal splitting processing shown in Figure 3 and 4. Then extend P points in Equation (5) to Equation (6).

$$y_e(n) = y_e(i+q\cdot P) = z(i), q = 0,1,...,Q-1, n = 0,1,...,N-1 \qquad \cdots (6)$$

This processing is the process shown in step 303 of Figure 3. For the user in the cell center, the cell edge signal $x_1(n)$ is removed from the whole received signal, and then the channel orthogonalizing processing is performed.
In this way, the transmitted signal from other interference cells and adjacent cells will be successfully removed to get the signal only related to the serving cell.
Finally, the information bits needed by the user in the serving cell is acquired through step 304 (de-orthogonalizing process of sub-carriers--DFT), step 305 (acquire information symbols transmitted in this cell from sub-carriers) and step 306 (data post-processing, including processing, such as de-modulation, de-interleaving and decoding, etc.), as shown in Figure 3.
While the invention has been shown and described with reference to certain preferred embodiments thereof, it will be understood by those skilled in the art that various changes in form and details may be made therein without departing from the spirit and scope of the invention as defined by the appended claims.

**Claims**

1. A method of orthogonalizing signals transmitted from a Base Station (BS) in an Orthogonal Frequency Division Multiple Access (OFDMA) system at a transmitting end, the method comprising the steps:

    a) performing encoding, interleaving and modulation on original information bits;
    b) allocating sub-carriers with equivalent intervals to a sub-channel, and dividing channels into two parts of a cell edge user channel and a center area channel;
    c) mapping modulated information symbols to the corresponding sub-carriers;
    d) performing orthogonalizing processing on the two parts of channels;
    e) for a user at an edge of a cell, according to a result of step b), dividing an OFDM symbol into subsections of equal length;
    f) multiplying the subsections obtained from step e) by a corresponding orthogonalizing sequence of the cell;
    g) adding the OFDM symbols of the two parts together to form a whole OFDM symbol;
    h) adding a cyclic prefix for the system; and
    i) performing Digital/Analog (D/A) conversion, Radio Frequency (RF) processing and feedback over a transmitting antenna on a base-band signal.

2. The method according to Claim 1, wherein the orthogonalizing processing is performed by inverse discrete Fourier transform.

3. The method according to Claim 1, wherein in step b), the sub-carriers allocated to the users at the edge of the cell use equivalent intervals which start from 0; and a product of a number of sub-channels and a number of sub-carriers of each channel equals a number of sub-carriers of the system.

4. The method according to Claim 1, wherein the subsection dividing in step e) is performed as follows:

$$x^{(0)}(n) = \frac{1}{\sqrt{N}} \cdot \sum_{p=0}^{P-1} X(p \cdot Q + k) \cdot e^{j \cdot \frac{2\pi}{N} \cdot n \cdot (p \cdot Q + k)}$$

$$= \frac{1}{\sqrt{N}} \cdot \sum_{p=0}^{P-1} X(p \cdot Q) \cdot e^{j \cdot \frac{2\pi}{P} \cdot n \cdot p}$$

where, $x^{(0)}(n), n = 0, 1, \cdots, N\text{-}1$ is an OFDM symbol sampling of the sub-channel used by the users at the edge of the cell, and $k = 0$, and
letting $m = 0, 1, \cdots, P - 1$ and $q = 0, 1, \cdots, Q\text{-}1$, $k = 0$ then

$$x^{(0)}(m + q \cdot P)$$

$$= e^{j \cdot \frac{2\pi}{N} \cdot (m + q \cdot P) \cdot k} \cdot \frac{1}{\sqrt{n}} \cdot \sum_{p=0}^{P-1} X(p \cdot Q + k) \cdot e^{j \cdot \frac{2\pi}{P} \cdot (m + q \cdot P) P}$$

$$= x^{(0)}(m)$$

.

5. The method according to Claim 1, wherein in the step f), multiply every P sampling by an orthogonalizing sequence sampling, make Q times of such processing.

6. A method of orthogonalizing signals transmitted from a Base Station (BS) in an Orthogonal Frequency Division Multiple Access (OFDMA) system at a receiving end, the method comprising steps:

  a) performing unloading, Analog/Digital (A/D) conversion on a received Radio Frequency (RF) signal, and converting a result to a base-band signal for succeeding processing;
  b) splitting a signal of a cell;
  c) spreading a result obtained from step b), performing cyclic spreading on P result points obtained from step b);
  d) for a user in a cell center, subtracting a result obtained in step c) from the received signal;
  e) performing a de-orthogonalizing processing on OFDM symbols;
  f) extracting information in sub-carriers; and
  g) performing de-modulation, de-interleaving and de-coding on data.

7. The method according to Claim 6, wherein the de-orthogonalizing of the channel is performed by discrete Fourier transform.

8. The method according to Claim 6, wherein said sub-channel in step c) is at least one sub-channel.

9. The method according to Claim 8, wherein when there are multiple sub-channels or all sub-channels belonging to one user, then one sub-channel every time is chosen; and the processing of step c)⌐ step k) is repeated until all information from the sub-channel is separated from the cell interference.

10. The method according to Claim 6, wherein the step b) is performed as followings:

$$z(i) = \sum_{i=0}^{P-1} \sum_{q=0}^{Q-1} C_{(0)}(q) x_r(i + q \cdot P)$$

where, $C$ is an orthogonalizing sequence of a transmitting end.

11. The method according to Claim 6, wherein in the de-orthogonalizing processing on the channel, based on multiplying of an orthogonalizing signal produced by a transmitting end for this cell by the received signal, every P sampling is multiplied by one orthogonalizing sampling sequence, for Q times, then results are added together correspondingly.

**12.** The method according to Claim 6, wherein period extension of P points data result is performed for Q-1 times to get N points data.

**13.** A system of orthogonalizing signals transmitted from a Base Station (BS) in an Orthogonal Frequency Division Multiple/Orthogonal Frequency Division Multiple Access (OFDM/OFDMA) system comprising a transmitting end which includes:

a) a pre-processing module, for performing encoding, interleaving and modulation on original information bits;
b) a sub-signal division module, for allocatting sub-carriers with equivalent intervals to a sub-channel, and dividing the channel into two parts of a cell edge user channel and a center area channel;
c) an information mapping module, for mapping modulated information symbols to corresponding sub-carriers;
d) an orthogonalizing processing module, for performing orthogonalizing processing on the two parts of channels;
e) a section dividing module, for a user at an edge of a cell, according to a result of step b), for dividing an OFDM symbol into subsections of equal length;
f) an orthogonalizing module, for multiplying subsections obtained from step e) by a corresponding orthogonalizing sequence for the cell;
g) an adding module, for adding OFDM symbols of the two parts together to form a whole OFDM symbol;
h) a cyclic prefix module, for adding a cyclic prefix for the system; and
i) a data post-processing module, for performing Digital/Analog (D/A) conversion, Radio Frequency (RF) processing and feedback over a transmitting antenna on a base-band signal.

**14.** The system according to Claim 13, wherein orthogonalizing processing is performed by using inverse discrete Fourier transform.

**15.** A system of orthogonalizing signals transmitted from a Base Station (BS) in an Orthogonal Frequency Division Multiplex/Orthogonal Frequency Division Multiplex Access (OFDM/OFDMA) system comprising a receiving end which includes:

a) a pre-processing module, for performing unloading, Analog/Digital (A/D) conversion on a received Radio Frequency (RF) signal and converting the received RF signal to a base-band signal for succeeding processing;
b) a splitting module, for splitting a cell signal;
c) a period spreading module, for spreading a result obtained from step b) and performing cyclic spreading on P result points obtained from step b);
d) a cell edge signal removing module, for a user in a cell center, subtracting a result from step c) from the received signal;
e) a de-orthogonalizing module, for performing de-orthogonalizing processing on OFDM symbols;
f) an information extracting module, for extracting information in sub-carriers;
g) a data post-processing module, for performing de-modulation, de-interleaving and de-coding on data.

**16.** The system according to Claim 15, wherein de-orthogonalizing processing of the de-orthogonalizing module is performed by using discrete Fourier transform.

**17.** The system according to Claim 15, wherein splitting processing is performed as follows:

$$z(i) = \sum_{i=0}^{P-1} \sum_{q=0}^{Q-1} C_{(0)}(q) x_r (i + q \cdot P)$$

where, $C$ is an orthogonalizing sequence of a transmitting end.

**18.** The system according to Claim 15, wherein period extension is repeated for Q-1 times to obtain N points data.

FIG.1

FIG.2

EP 1 850 525 A1

301
Pre-processing of the received signal (demodulation, A/D conversion, etc.) → 302 Cell signal splitting processing → 303 Period extension of the cell's received signal in time domain → 304 Channel de-orthogonalizing process (DFT)

306 Data after-processing (de-modulation, de-interleaving, decoding) ← 305 Acquire information symbol in sub-carriers

FIG.3

FIG.4

1st sub-channel

○ Sub-carriers in sub-channel 1
△ Sub-carriers in sub-channel 2

2nd sub-channel

FIG.5

EP 1 850 525 A1

| 1 | $e^{f \cdot \frac{2\pi}{Q} \cdot k}$ | . . . . | $e^{f \cdot \frac{2\pi}{Q} \cdot (Q-2)k}$ | $e^{f \cdot \frac{2\pi}{Q} \cdot (Q-1)k}$ |
|---|---|---|---|---|

Phase difference

| 0th cycle | 1st cycle | . . . . | Q−2th cycle | Q−1th cycle |
|---|---|---|---|---|

$\longleftarrow$ P $\longrightarrow$

# FIG.6

| 1 | 1 | . . . . | 1 | 1 |

Phase difference

| 0th cycle | 1st cycle | . . . . | Q-2th cycle | Q-1th cycle |

P samplings

N samplings

FIG.7

P sub-carriers

Sub-carrier interval is Q

N points IDFT transform

Sequence to tell the cells (Q)

| + | – | – | + |

OFDM symbol 1 formed by sub-carriers
allocated to cell edge users, x1(m)

P samplings

Total OFDM
symbol xt (m)

OFDM symbols 2 formed by sub-carriers
allocated to cell center users, x2 (m)

N points IDFT transform

Other sub-carriers

...... ...... ......

# FIG.8

European Patent
Office

## EUROPEAN SEARCH REPORT

Application Number

EP 07 00 8432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FUJII T, LEE K: "Band separated MC-CDMA system for downlink cellular networks" IEEE VEHICULAR TECHNOLOGY CONFERENCE, 25 September 2005 (2005-09-25), pages 741-745, XP010878581 PISCATAWAY, NJ, USA, IEEE ISBN: 0-7803-9152-7 * abstract; figures 1-3 * sections I, II, III.A, III.B, V ----- | 1-18 | INV. H04L5/02 H04L27/26 |
| A | EP 1 587 268 A (SAMSUNG ELECTRONICS CO LTD [KR]) 19 October 2005 (2005-10-19) * figures 2,6-8 * * paragraph [0035] - paragraph [0042] * * paragraph [0062] * ----- | 1-18 | |
| A | WO 2004/045228 A (BROADSTORM TELECOMMUNICATIONS [US]; MEIYAPPAN P [US]) 27 May 2004 (2004-05-27) * abstract; claims 1-3; figure 6 * * paragraph [0025] * * paragraph [0044] * * paragraph [0051] - paragraph [0052] * * paragraph [0060] * ----- | 1-18 | TECHNICAL FIELDS SEARCHED (IPC) H04L |
| A | US 2005/180311 A1 (WANG H [FI] LILLEBERG J [FI]) 18 August 2005 (2005-08-18) * abstract; figures 2,3 * * paragraph [0018] - paragraph [0019] * * paragraph [0083] * ----- -/-- | 1-18 | |

The present search report has been drawn up for all claims

| Place of search | Date of completion of the search | Examiner |
|---|---|---|
| The Hague | 3 September 2007 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 850 525 A1

**European Patent Office**

**EUROPEAN SEARCH REPORT**

Application Number

EP 07 00 8432

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SARI H: "A multimode CDMA scheme with reduced intercell interference for LMDS networks" INTERNATIONAL ZURICH SEMINAR ON BROADBAND COMMUNICATIONS, 15 February 2000 (2000-02-15), pages 307-312, XP010376474 PISCATAWAY, NJ, USA, IEEE, US ISBN: 0-7803-5977-1 * abstract; figure 1 * sections 3-5 ----- | 1-18 | |

TECHNICAL FIELDS SEARCHED (IPC)

The present search report has been drawn up for all claims

| Place of search | Date of completion of the search | Examiner |
|---|---|---|
| The Hague | 3 September 2007 | Faber, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 00 8432

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2007

| Patent document cited in search report | | Publication date | Patent family member(s) | | Publication date |
|---|---|---|---|---|---|
| EP 1587268 | A | 19-10-2005 | AU | 2005234350 A1 | 27-10-2005 |
| | | | CA | 2559459 A1 | 27-10-2005 |
| | | | CN | 1943143 A | 04-04-2007 |
| | | | WO | 2005101700 A1 | 27-10-2005 |
| | | | KR | 20050100528 A | 19-10-2005 |
| | | | US | 2006234715 A1 | 19-10-2006 |
| WO 2004045228 | A | 27-05-2004 | AU | 2002364698 A1 | 03-06-2004 |
| | | | CA | 2506205 A1 | 27-05-2004 |
| | | | CN | 1732698 A | 08-02-2006 |
| | | | EP | 1559281 A1 | 03-08-2005 |
| | | | JP | 2006506014 T | 16-02-2006 |
| US 2005180311 | A1 | 18-08-2005 | CN | 1918874 A | 21-02-2007 |
| | | | EP | 1721433 A1 | 15-11-2006 |
| | | | WO | 2005086446 A1 | 15-09-2005 |
| | | | KR | 20060121969 A | 29-11-2006 |

EPO FORM P0459

For more details about this annex : see Official Journal of the European Patent Office, No. 12/82